Europäisches Patentamt

(19) European Patent Office

Office européen des brevets

(11) Publication number: **0 049 025**
**B2**

(12) # NEW EUROPEAN PATENT SPECIFICATION

(45) Date of publication of the new patent specification:
24.05.89

(51) Int. Cl.⁴: **A 23 N 17/00, A 23 K 1/00**

(21) Application number: **81201087.4**

(22) Date of filing: **29.09.81**

(54) Method for producing pelletized animal fodder by compression as well as apparatus for carrying out this method.

(30) Priority: **06.10.80 NL 8005517**

(43) Date of publication of application:
**07.04.82 Bulletin 82/14**

(45) Publication of the grant of the patent:
**30.01.85 Bulletin 85/5**

(45) Mention of the opposition decision:
**24.05.89 Bulletin 89/21**

(84) Designated Contracting States:
**AT BE CH DE FR GB IT LI LU NL SE**

(73) Proprietor: **WESSANEN MENGVOEDERS B.V.,
Ebbehout 1 Postbus 630, NL-1500 EP Zaandam (NL)**

(72) Inventor: **van Haaster, Joseph Nicolaas,
Kennemerstraatweg 47, NL-1851 BA Heilo (NL)**
Inventor: **van de Weide, Robert Jan, Krommeniedijk 78,
NL-1562 GM Krommenie (NL)**
Inventor: **Goedhart, Jan, Noorddijk 100 A, NL-1521 PE
Wormerveer (NL)**

(74) Representative: **van der Beek, George Frans et al,
Nederlandsch Octrooibureau Scheveningseweg 82 P.O.
Box 29720, NL-2502 LS 's-Gravenhage (NL)**

(56) References cited:
DE-A- 1 692 482
FR-A- 2 323 340
NL-C- 97 644
US-A- 3 932 091

Industries Alimentaires et Agricoles, 1978, p.1125-1138
Proc. World Maricult. Soc. 10, p.674-688 (1979)
Proc. World Maricult. Soc. 11, p.454-462 (1980)
Cereal Chemistry, 45, p.612-615 (1968)
Archiv für Tierernährung, 30 (1980) No.1-3, p.257-262
Surveyor, 3 April 1980, p.10-11
Department of Environment, London, 3 April 1980
Aufbereitungstechnik, no.12(1979) p.660-667
Port of Grain, April 1979
Final Report "Improvement of Tapioca pellet quality"
March 1979

(56) References cited: (continuation)
Circular "Cebeco-Handelsraad" no.470 Sept.14 1979
Animal Production, 1978, Vol.27, p.161-169 Cuthbert et
al.
Brochure "Unitrition International Nutritional and
Technical "know-how'"
Schweiz. Arch. Tierheilk.122, p.127-136 (March 1980)
"Review of Pharmaceutical Granulation" in Int. J.
Pharm. Tech Prod (1980) 1(2) 32-39 p.38-39

## Description

The invention relates to a method for obtaining a particulate animal fodder by pelleting the component ingredients thereof by compression so that a product is obtained in the form of pellets and to an apparatus for pelleting animal fodder comprising a compressive pelleter.

It is generally known to produce pelletized animal fodder by compression starting from a number of raw materials either blended or not. Such pellets may be handled more easily and cause lower losses due to the formation of dust and spilling than non-compressed animal fodder. For this reason among others the farmers prefer pelletized animal fodder which then should be of a sufficient hardness to prevent crumbling and agglomeration thereof during transportation and storage. Such crumbling and agglomeration might occur for instance in storage silos in which pellets may be subject to a rather high pressure locally. The lumbs and dust thus formed will then inhibit the discharge from the silos or cause clogging of the automatic feeding systems at stockfarms, while part of the meal will remain in the fodder mangers. By practical experience the producers of animal fodders know the minimum required hardness of their product.

Usually the pelletizing operation is performed by means of an apparatus including a rotating annular die, the inner wall of which is engaged by one or more rollers. The die has been provided with perforations the diameter of which corresponds to the desired diameter of the pellets. The meal-like animal fodder is supplied to the inside of the die, entrained by this die and pressed into the die perforations by means of the rollers. The animal fodder is discharged in compressed condition from the die at the other side thereof. The apparatus is usually provided with means for supplying steam and molasses.

Likewise there are embodiments in which the meal-like animal fodder is pressed by means of a roller through a flat horizontally positioned perforated die.

FR-A 2 323 340 describes a high pressure conditioner mounted above a pelleter. The product to be pelleted is passed through this conditioner in order to bring the product at a temperature above 100° and to maintain it at this temperature, to obtain a uniform temperature throughout the product. The steam supplied causes a thickness of the product since the moisture contents increases. The resulting product from the apparatus is a sodden paste that is not compressed. The product pellets are of an insufficient hardness.

By the hardness of the pellets there is meant both the abrasion resistance of the pellets which is measured by rotation in a rotating drum, and also the required mean stress at which the pellets fail in compression. In the first instance one uses the term "pellet-durability index" (pd) or abrasion whereas in the latter instance one speaks about the hardness in the limited sense of the word or, if based on the diameter of the pellets, of the specific hardness. No generally employed standard procedure exists for determining this hardness. Several instruments are commercially available indeed such as the Kahl hardness tester, the Instron meter, the Allo-Kramer shear press and the Pfost pellet durability or pd tester. Where no generally employed standard procedure exists the results are only comparable in as far as the same procedure has been employed.

The hardness of the pellets is effected by several factors. Among others mention may be made of the moisture content, cooling, adjustment of the pelletizer, use of steam, use of harding material, selection of the die, etc. As is apparent form the literature: 1. Foeller et al, die Mühle und Mischfuttertechnik 115, 1978, nr. 33, pages 473–475, W. Friedrich et al, Kraftfutter 1968, nr. 1 and 2, pages 59–63, W. Friedrich et al, die Mühle und Mischfuttertechnik, 116, 1979, nr. 39, pages 527–530 these frequently come to avail. By means of the known methods it is however, impossible to produce sufficiently hard pellets under the currently applied pelletizing conditions when utilizing relatively large amounts of the so-called "softening" raw material like for instance tapioca meal, fats and coco nut meal. Such raw materials are frequently available, however, and are also of good food value.

It is known from Industries Alimentaires et Agricoles, sept.–oct. 1978, pages 1125–1138 that a protein rich paste obtained from Lucerne can be formed to soft pellets by processing on a pellet mill. Said pellets are dried from a moisture content of 50% to a moisture content of 8%.

The pre-pellets obtained are brittle and porous and are regranulated to pellets of a higher density to avoid oxidation.

Arch. Tierernährung, Bd 30, (1980), 1–3 pages 257–262 teaches lye treated straw as a component of cattle fodder. This method uses preferably two steps. The two step method results in a lower fines content than the one step method. In the first step the straw is packaged into cobs before mixing with concentrates. It discloses pre-pressing lye treated straw in a die-press and a final pressing step after mixing with concentrates by means of a thick die. The average particle size is significantly reduced both by pre-pressing in a die and a roller press and by increasing die thickness and pressing of the compounds.

The normal pelletizing method comprises the following steps: The meal to be pelletized which either blended or not may be stored in a cell supplied to a metering device, for instance by means of a metering jack and then metered to the blender for instance by means of metering jack of adjustable rotational speed. Optionally molasses, vinasse (i.e. fermented molasses from which the alcohol produced is removed) and/or other fluids may be added in the blender. Optionally steam may be supplied to the blender. The meal is passed through the blender whereupon the meal is blended or not with the fluids and/or the steam (in practice such a treatment requires 5–60 seconds). The product obtained is then passed to an ageing tank (heat retention tank) or not and thereafter kept at the same temperature for some time (3-60 minutes) while agitating slowly and optionally supplying steam or heating indirectly. The product is then supplied to the pelletizer entrained there through. The pellets obtained from the pelletizer are cooled down for instance by passing air at ambient temperature there through, preferably by suction. The pellets obtained are sifted and the meal thus removed (often 5-20%) is returned to the process. Finally the cooled and sifted pellets are discharged to the storage of product or filled in sacks. Common pellet diameters for the pelletized fodder are 5-8 mm for cattle and cows, 3-6 mm for hogs and pigs and 2-4 mm for poultry. Of course deviation therefrom is possible.

Surprisingly it has now been found that when using the same raw materials a harder pellet or when using a relatively larger amount of the so-called softening raw materials just as hard a pellet may be obtained, respectively, when the material obtained in the known way is pelletized again.

The invention thus provides a method for obtaining a particulate animal fodder by pelleting the component ingredients thereof by compression, so that a product is obtained in the form of pellets characterized in that said pellets are treated in that form, without being subjected to any intermediate treatment, on a compressive pelleter for at least one other time. Accordingly it is not necessary to grind the pellets obtained in the first step, to fines again. The operation may be repeated several times, if desired.

The invention further provides an apparatus for pelleting animal fodder comprising a compressive pelleter (8) so that a product is obtained in the form of pellets characterized in that at least one other compressive pelleter (12) is mounted in series therewith, and that the apparatus comprises no means between successive pelleters, for performing intermediate treatment on the pellets produced by the preceeding compressive pelleter.

In this context it is observed that the present invention does not require intermediate treatments between the pelleting steps, so that means for intermediate treatments are superfluous.

It is completely unexpected that pelleters designed for converting meal-like substances to pellets (pellets, strands, splits, bits, crumbs, etc.) are also quite capable of converting a material consisting for 100% of large pellets. One would expect that such large pellets would not be fit for seizure by the roller because at the locations where the pellet engages both the roller and the die the wedge angle is large than in case of small particles like in case of a meal. An improper seizure of the particles would lead to a damming of the material next to and in front of the rollers, such being conductive to a complete filling of the pelleter and a stagnation of the production. It is known for that matter that pelleters are operated at the thickness of the meal layer on the inside of the die of 2-3 mm. It now appeared that pellets having a diameter of even 10 mm and an even greater length may be processed excellently on a pelleter of the usual type.

Likewise one would expect that due to the deformation in the subsequent pelletizing operation the existing bonds between the particles will be destroyed, this being conducive to a lower hardness. Surprisingly, however, just the opposite appears to occur. Finally one would expect that fats which upon repeated compression will be pressed out of plant cells would be conducive to a less strong pellet just like the addition of separately added fats. It appears, however, that the pellet becomes stronger. No explanation has as yet been found for the greater hardness of this so-called two or more step pellets. The die perforations of the pelleter for the subsequent steps may be of dimensions smaller, equalling or larger than those of the preceding step.

The strands obtained from the first pelleter may be cut at any arbitrary length or not at all.

The method according to the invention opens the possibility to incorporate relatively larger amounts of high energy raw materials in the blended fodders, which would as yet be conducive to soft a product. There is great need of such high energy blended fodders.

Another ingredient offering many advantages in a blended fodder is coco nut meal. In cattle this ingredient increases the milk fat content. However, this ingredient possesses a highly decreasing effect on the hardness of the fodder made into pellets. The method according to the invention opens the possibility to incorporate a larger amount of coco nut meal in the fodder blend than possible at present while attaining a sufficient pellet hardness.

Examples of ingredients that may be incorporated advantageously in accordance with the method of the invention are fats, oils, linseed, palm kernels, tapioca, oats, wheat brans, rapeseed meal, barley-chaff, bone meal, coco nut meal, cotton seed husks, cerial germs, corn cobs and minerals. Thus it becomes possible to prepare a fodder of comparable feed value having a sufficient hardness but containing a lower wheat and/or linseed meal content.

Another problem is that dairy cattle at a very high production level requires a high caloric fodder because it cannot consume a sufficient amount of low caloric fodder for satisfying its energy requirements. The addition of fat or oil seeds to the blended fodder increases the energy content thereof but the pellet strength will rather soon fall below the required minimum. When applying the method according to the invention the hardness may be increased to a sufficient level, that is to say in accordance with the invention high fat pellets having a sufficient hardness may be obtained. Hereby the milk production of milk cows may be kept at a very high level for a longer period of time.

## Example I

**Dairy cattle fodder**

| | Usual (% by weight) | Pelletized Twice including a Relative Larger Amount of "soft" Ingredients (% by weight) |
|---|---|---|
| linseed | 4 | 3 |
| rapeseed meal | – | 3 |
| coco nut meal | – | 20 |
| corn gluten fodder meal | 25 | 25 |
| citrus pulp | 35 | 35 |
| fat | 1 | 1 |
| linseed scales | 7 | – |
| beet pulp | 15 | – |
| molasses | 10 | 10 |
| vitamins, minerals, traces | 3 | 3 |
| specific hardness | 0.60 kg | 0.62 kg |
| do, pelletized 1 × | | 0.43 kg |
| pellet diameter | 6 mm | |

Cattle farmers attach great value to coco nut meal. This increases the milk fat content, is low priced but possesses a highly decreasing effect on the hardness of the pelletized fodder. By pelletizing twice an appreciable larger amount of coco nut meal may be incorporated in a composition than at present, while retaining the pellet hardness.

## Example II

**Pig fattening fodder**

| | Usual (% by weight) | Pelletized Twice Including a Relative Larger Amount of "soft" Ingredients (% by weight) |
|---|---|---|
| barley | 20 | 5 |
| wheat | 30 | – |
| wheat brans | – | 21 |
| tapioca | 16 | 36 |
| linseed meal | 6 | – |
| soya bean meal | 20 | 20 |
| animal fat | 1 | 5 |
| sun flower seed | – | 6 |
| vitamins, minerals, traces | 3 | 3 |
| molasses | 4 | 4 |
| specific hardness | 0.40 kg | 0.40 kg |
| do, pelletized 1 × | | 0.25 kg |
| pellet diameter | 5 mm | |

Wheat and linmeal yield hard pellets but are high in price per one unit of feed value. The reverse holds for tapioca, fat and brans. By pelletizing twice there may thus be prepared a whole pig fodder starting from cheaper raw materials than possible until now, while rataining the pellet hardness.

Example III

| | Dairy Cattle Fodder 950 fud* | Dairy Cattle Fodder 1,055 fud* |
|---|---|---|
| linmeal | 5 | 5 |
| coco nut meal | 10 | 10 |
| rapeseed meal | 6 | 6 |
| soya bean meal | 1.5 | 1.5 |
| sunflower seed meal | 10 | 10 |
| corn gluten fodder meal | 15 | 15 |
| tapioca meal | 7 | 3.8 |
| pulp | 32 | 32 |
| beef tallow | 1.3 | 4.5 |
| molasses | 10 | 10 |
| minerals, vitamins, traces | 2.2 | 2.2 |
| specific hardness | 0.40 kg | 0.40 kg |
| do, pelletized 1 × | | 0.27 kg |
| pellet diameter | 6 mm | |

*fodder units dairy cattle.

It is common knowledge that dairy cattle having a very high production level requires high caloric fodder because low caloric fodder cannot be consumed in sufficient amounts to satisfy the energy requirement. The addition of fat to the blended fodder increases its energy content but the pellet stength will soon fall below the required minimum. By pelletizing twice the hardness of such a high fat blended fodder may be raised above the required minimum. By pelletizing twice there may accordingly be produced a fodder having a sufficient hardness the energy content of which is higher than is possible at present. Hereby the milk production of dairy cows may be kept at a very high level for longer period of time.

Example IV

A blend comprising 44% by weight of tapioca meal, 44% by weight of coco nut meal both being known as softening raw materials, 10% by weight of molasses and 2% by weight of vitamins + minerals is pelletized repeatedly.

| | Specific Hardness | pd-index |
|---|---|---|
| pelletized 1 × | 0.25 | 9.80 |
| pelletized 2 × | 0.33 | 9.82 |
| pelletized 3 × | 0.44 | 9.84 |
| pelletized 4 × | 0.57 | 9.87 |
| pelletized 5 × | 0.65 | 9.89 |
| pellet diameter | 6 mm | |

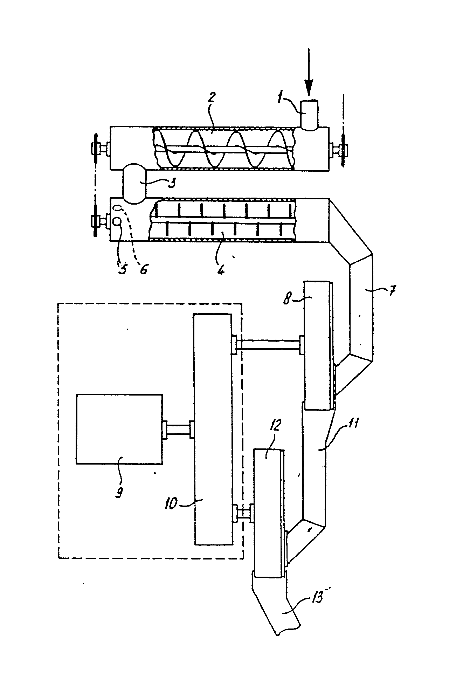

## Claims

1. Method for obtaining a particulate animal fodder by pelleting the component ingredients thereof by compression so that a product is obtained in the form of pellets, characterized in that said pellets are treated in that form, without being subjected to any intermediate treatment, on a compressive pelleter for at least one other time.

2. Method for obtaining a particulate animal fodder according to claim 1, in which the component ingredients are passed through a first pelleter (8) characterized in that the pellet product obtained is passed again through a similar pelleter (12).

3. Method according to claim 2, characterized in that the product is another time or several times passed through a pelleter.

4. Apparatus for pelleting animal fodder comprising a compressive pelleter (8) so that a product is obtained in the form of pellets characterized in that at least one other compressive pelleter (12) is mounted in series therewith, and that the apparatus comprises no means between successive pelleters, for performing intermediate treatment on the pellets produced by the preceding compressive pelleter.

5. Apparatus according to claim 4, characterized in that the pelleters (8 and 12) are mounted on a single frame and are driven both by a common motor (9). From the above it is apparent that one may yet further increase the strength of the pellet by repeating the pelletizing operation.

The annexed drawing shows an example of an apparatus according to the invention. With reference to this drawing the numeral 1 indicates the supply of raw material, which raw materials – by way of a conveyor means 2 and a supply conduit 3 – are fed to a blender 4 which blender may appropriately be in the shape of a paddle mixer. Advantageously the conveyor means 2 is of the variable speed type. Furthermore the blender 4 is provided with conduits for supplying steam and molasses, etc. (5 and 6, respectively). By way of conduit 7 the blended ingredients are fed from the blender to the pelletizing means 8 which is driven by a motor 9 and driving gear 10. By way of conduit 11 the pellets obtained by compressive pelletizing are then fed to the second pellet 12 from which the pellets are discharged via conduit 13. Suitably the pelleter 12 is also driven by the motor 9 and the driving gear 10. One may of course also use two separate motors and driving gears. The pelleter means may also be of a horizontal design instead of a vertical design or may be squared with respect to each other.

## Patentansprüche

1. Verfahren zum Erzeugen eines Partikel-Viehfutters durch Pelletieren seiner Zusammensetzungsbestandteile durch Druck, in der Weise dass ein Produkt in der Form von Pellets erhalten wird, dadurch gekennzeichnet, das das erhaltene pelletierte Produkt in dieser Form, ohne eine Zwischenbehandlung, auf einem Druckpelletierer wenigstens ein weiteres Mal behandelt wird.

2. Verfahren zum Herstellen eines Partikel-Viehfutters nach Anspruch 1, bei dem die Zusammensetzungsbestandteile durch einen ersten Pelletierer (8) geleitet werden, dadurch gekennzeichnet, dass das erhaltene pelletierte Produkt noch einmal durch einen gleichartigen Pelletierer (12) geleitet wird.

3. Verfahren nach Anspruch 2, dadurch gekennzeichnet, dass das Produkt ein weiteres oder mehrere Male durch einen Pelletierer geleitet wird.

4. Vorrichtung zum Pelletieren von Viehfutter mit einem Pelletierer (8), in der Weise, dass ein Produkt in der Form von Pellets erhalten wird, dadurch gekennzeichnet, dass wenigstens ein weiterer Pelletierer (12) nachgeschaltet ist und dass der Apparat zwischen nacheinander geschaltete Pelletierers keine Organe zur Durchführung einer Zwischenbehandlung der dem vorgeschalteten Pelletierer produzierten Pellets umfasst.

5. Vorrichtung nach Anspruch 4, dadurch gekennzeichnet, dass die Pelletierer (8 und 12) in einem einzigen Rahmen angeordnet und zusammen von einem gemeinsamen Motor (9) angetrieben sind.

## Revendications

1. Procédé pour obtenir un aliment en particules pour animaux, en soumettant à une granulation par compression ses ingrédients constitutifs jusqu'un produit en forme des granules et obtenu, caractérisé en ce que l'on traite le produit granulé obtenu dans un granulateur à compression au moins une seconde fois, sans étant soumis a un traitement intermédiaire des granules produit par le granulateur précédent.

2. Procédé pour obtenir un aliment en particules pour animaux selon la revendication 1, dans lequel on fait passer les ingrédients constitutifs à travers un premier granulateur (8), caractérisé en ce que l'on fait passer de nouveau le produit granulé obtenu à travers un granulateur similaire (12).

3. Procédé selon la revendication 2, caractérisé en ce que l'on fait passer le produit une autre fois ou plusieurs fois à travers un granulateur.

4. Appareil pour granuler un aliment pour animaux comprenant un granulateur (8) à obtenir un produit granulé, caractérisé en ce que au moins un autre granulateur (12) est monté en série et que l'appareil ne contient pas un organe entre deux granulateurs pour un traitement intermédiaire des granules produites par le granulateur précédent.

5. Appareil selon la revendication 4, caractérisé en ce que les granulateurs (8 et 12) sont montés sur un seul bâti et sont entraînés tous deux par un moteur commun (9).